(19) Europäisches Patentamt / European Patent Office / Office européen des brevets

(11) **EP 3 689 530 B1**

(12) **EUROPEAN PATENT SPECIFICATION**

(45) Date of publication and mention
of the grant of the patent:
**13.09.2023 Bulletin 2023/37**

(21) Application number: **20164591.8**

(22) Date of filing: **13.09.2010**

(51) International Patent Classification (IPC):
**B23K 26/36** *(2014.01)*        **B23K 26/04** *(2014.01)*
**H01S 3/10** *(2006.01)*

(52) Cooperative Patent Classification (CPC):
**B23K 26/0608;** H01S 3/005; H01S 3/2383

(54) **INDUSTRIAL HIGH POWER FIBER LASER SYSTEM WITH OPTICAL MONITORING ASSEMBLY**

INDUSTRIELLES HOCHLEISTUNGSFASERLASERSYSTEM MIT OPTISCHER
ÜBERWACHUNGSANORDNUNG

SYSTÈME LASER À FIBRE INDUSTRIEL HAUTE PUISSANCE AVEC ENSEMBLE DE
SURVEILLANCE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**05.08.2020 Bulletin 2020/32**

(62) Document number(s) of the earlier application(s) in
accordance with Art. 76 EPC:
**10857363.5 / 2 616 209**

(73) Proprietor: **IPG Photonics Corporation
Oxford, Massachusetts 01540 (US)**

(72) Inventors:
• **Moroni, Giovanni**
  **20156 Milan (IT)**
• **Colombo, Daniele**
  **20156 Milan (IT)**
• **Previtali, Barbara**
  **20156 Milan (IT)**
• **Cattaneo, Stefano**
  **20025 Legnano (IT)**
• **Rossotti, Lorenzo**
  **20025 Legnano (IT)**
• **Grapov, Yuri**
  **Sutton, MA 01590 (US)**

(74) Representative: **Kohlmann, Kai
Donatusstraße 1
52078 Aachen (DE)**

(56) References cited:
WO-A1-2004/068204        WO-A2-2004/068652
GB-A- 2 458 304          KR-A- 20090 112 282
US-A1- 2010 189 138

**Description**

BACKGROUND OF THE DISCLOSURE

Field of the Disclosure

The disclosure relates to high power fiber laser systems (HPFLS) for processing material in industrial methods. In particular, the disclosure relates to a HPFLS system operative to generate a high quality output beam reaching kW levels. Furthermore, the disclosure relates to HPFLSs provided with an on-line monitoring assembly of the backreflected optical emission propagating through the optical combiner.

Prior Art Discussion

Laser-assisted welding, cutting, marking, drilling, cladding and other material processing industrial methods require precise control of a variety of fiber laser-assisted techniques. The high power fiber laser may output radiation in kilowatts. With such high-power outputs, the quality of the output beam presents became a focal point of research.
Accordingly, the power and quality of the laser beam are among essential laser-related characteristics which may affect the material to be processed. Hence the information related, for example, to the conditions of the weld indicative of laser parameters should be closely monitored.
US 2010/189138 A1 discloses a high power fiber laser system having a fiber combiner configured with a plurality of single mode (SM) fiber lasers which collectively radiate a combiner output characterized by a minimally possible $M^2$ factor. The plurality of SM fibers have respective terminal ends placed in parallel to one another which are further heated and stretched so that the claddings of respective SM fibers collectively define the combiner. The combiner is exposed to heat and tension making the terminal ends simultaneously elongate and radially shrink. The reduction is monitored so that multiple fiber outputs each maintain a substantially Gaussian shape. The result of the disclosed process is to have a combiner output having an optimally small far field divergence which provides for the smallest possible $M^2$ factor. Problems caused by powerful back reflected light are resolved by providing a termination block configured with a quartz block which is fused to the downstream end of the combiner's output. The block with the relatively large inner diameter allows the combiner output beam to expand. As a consequence, the power density of the combiner output is reduced and, therefore, the possibility of damaging the outer coating is minimized. However, the beam of the combiner's light output does not loose its high quality, since the single modes of respective SM fiber outputs do not reach the outer boundary of the block, which otherwise will lead to the increase of $M^2$ factor.
KR 2009 0112282 A discloses a laser processing apparatus capable of monitoring the power value of a back reflected laser beam entering the output end of an optical fiber bundle that include laser sources, a plurality of optical processing fibers converging in the optical fiber bundle, a monitoring unit having a monitoring optical fiber disposed on the edge of the optical fiber bundle and a control unit. The laser sources generate a laser beam of a predetermined wavelength selected according to the processing conditions of an object to be processed. A mask is provided with an opening to correspond to the position of the object to be laser treated. The mask protects the remaining area other than the object. The laser beam emitted from the optical fiber bundle passes through the opening and is irradiated to the object to be treated. However, when the opening of the mask and the optical fiber bundle are not positioned in straight line, the beam may be reflected by the mask back to the optical fiber bundle. In such a situation there is a risk that the optical processing fibers are damaged by the back reflected laser beam. To avoid this problem the monitoring unit is configured for measuring the power value of the back reflected laser beam transmitted through the monitoring optical fiber. When the power value of the back reflected laser beam measured by the monitoring unit is greater than or equal to a reference power value set to prevent damage to the optical processing fibers the control unit stops the generation of the laser beam from the laser sources.
A continuous need therefore exists for a high power fiber laser industrial system operative to deliver a powerful, high quality light.
Furthermore, there is a need for a fiber combiner configured with a plurality of single mode feeding input fibers and operative to output a combined laser beam with an optimally small beam quality parameter $M^2$ .
Finally, there is a need to provide a high power fiber laser system with a reliable monitoring system capable of correctly detecting backreflected radiation indicative of operating conditions of the laser modules and conditions of the surface of the workpiece to be processed by a powerful, high quality laser beam in order to improve the work product or any other operational results of the operation of the high power fiber laser system.

SUMMARY OF THE DISCLOSURE

The above-identified needs are met by the disclosed high power fiber laser system (HPFLS) according claim 1 and a method for operating the HPFLS according to claim 9. The disclosed system is configured with one or more fiber laser modules having respective feeding fibers, which are combined together to define a fiber combiner, and with a monitoring assembly.

The combiner is configured from multiple feeding fibers and structured to guide the forward propagating radiation with the smallest possible $M^2$ factor - the reliable indication of the quality of light incident on the surface to be treated, as known to one of ordinary skills. In order to achieve the optima quality of light, the cumulative radiation of combined individual feeding fibers from respective laser modules should be as small as possible. The lower the M factor, the higher quality of the outcome of the material processing. The low cumulative radiation is attained by controllably modifying geometry of individual fibers and combiner so that the numerical aperture (NA) of the individual fibers and the NA the combiner output, which directly affects the M factor, are minimally possible.

The combiner may be configured with one or more spare fibers that can be further connected to a monitoring assembly operative to detect backreflected radiation. Accordingly, the combiner receives the backwards propagating radiation and guides the received backreflected radiation to the monitoring assembly.

BRIEF DESCRIPTION OF THE DRAWINGS

The above and other features and advantages of the disclosure are discussed herein below in conjunction with the drawings, in which:

FIG. 1 is a diagrammatic view of the disclosed high fiber laser system provided with a monitoring assembly.

FIG. 2 is a simplified schematic of the monitoring assembly;

FIG. 3A and 3B respective side and end diagrammatic views of a fiber combiner;

FIG. 4 is a diagrammatic view of laser module;

FIG. 5 is a diagrammatic view of a fiber laser provided in the laser module;

FIG. 6 is an diagrammatic elevated view of laser head;

FIG. 7 is a view of shield holder preventing material particles, which leave the melted surface of the workpiece, from penetrating into the laser head.

SPECIFIC DESCRIPTION

Reference will now be made in detail to the disclosed system. Wherever possible, same or similar reference numerals are used in the drawings and the description to refer to the same or like parts or steps. The drawings are in simplified form and are far from precise scale.

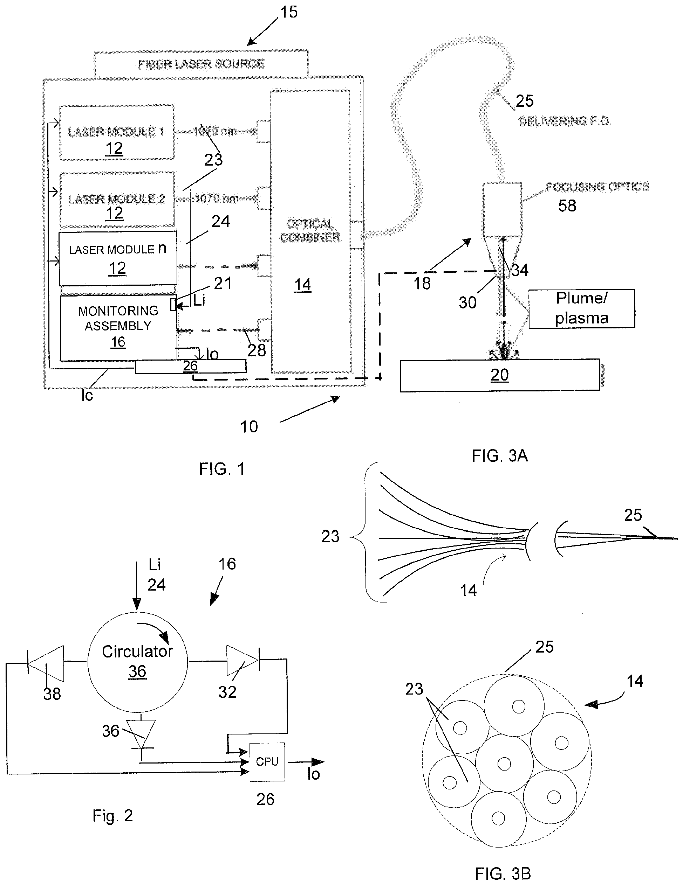

Referring to FIG. 1, a high power fiber laser system 10 is configured to provide for material processing including, but not limited to welding, cutting, marking, drilling, and cladding. The HPFLS 10 includes a fiber laser source 15 configured with multiple fiber laser modules 12 which have respective feeding fibers 23 operatively connected to one another in a combiner 14 which emits a high quality signal light at a predetermined wavelengths, such as 1070 nm given here only as one of numerous possible wavelengths.

The signal light is coupled into a multimode delivering fiber 25 launching the light into a laser head 18. As known to one of ordinary skills in the industrial fiber laser system arts, laser head 18 is configured with focusing optics 58 directing signal light towards a workpiece 20. During the incidence of focused signal light 30 onto the surface of workpiece 20, the surface begins to melt with the generation of backreflected light emission which propagates towards the upstream of HPFL 10 through head 18 and combiner 14 towards lasers modules 12. A backreflected signal light is also propagates back to the outputs of the respective laser modules. The combined backreflected signal 34 is coupled into assembly 16 operative to monitor backreflected radiation spectrum between about 400 nm to about 2000nm, as discussed below.

When, for example, workpiece 20 is being cut or welded, emission from the molten material and reflected light at the wavelength of the signal light can be simultaneously monitored. Depending on the processing parameters of the laser modules, the melt can change. The thermal emission is sensitive to the cutting/welding front, depth of the cut and other characteristics of the cutting/welding process and, if properly monitored, may provide useful information of the quality of the work product. On the other hand, the backreflected radiation may be indicative of the absorption of the laser power, which depends on the wavelength, and the stability of the power density. Overall, light 34, further referred as backreflected radiation, is characterized by a spectrum which is evaluated by monitoring assembly 16 and further compared to the reference in a central processing unit (CPU) 26.

In accordance with one aspect of the disclosure, at least one or multiple feeding fibers 23 are in optical communication with monitoring assembly 16 via a control signal fiber 24. The backreflected radiation 34 leaving combiner 14 is uniformly distributed between feeding fibers 23 and, therefore, light coupled into monitoring unit 16 is indicative of the conditions of the process. Alternatively, instead of control signal fiber 24, combiner 14 can be configured with one or more extra fibers 28 connected directly to monitoring assembly 16. The monitoring assembly 16 may be configured with monitoring devices selected from spectroscopes, interferometers and photodiodes and operative to process the coupled backreflected radiation.

FIG. 3 illustrates an exemplary configuration of monitoring assembly 16 operative to detect visible, NIR and/or UV wavelength ranges of backreflected radiation (Li) 34 and output signal or signals Io which further match to a reference value - respective empirically determined desired ranges in CPU 26. If no match is determined, CPU 26 generates a control signal Ic coupled into the laser modules 12 so as to modulate parameters of the lasers improving the work product, i.e., a cut, weld or any other operational results.

The control signal fiber 24, for example, is coupled into an SMA 21 mounted to the housing of assembly 16 and optically connected to a fiber collimator (not shown) operative to focus backreflected radiation (Li) 34 inside the housing. The focused radiation is incident upon the input port of a light-guiding component configured to direct the focused radiation along one or more measuring paths towards optoelectronic components.

The light-guiding component may be selected from beam splitters (not shown), circulators and the like. As shown in FIG. 2, the light-guiding component is configured as a circulator 36 having an input and one or more output ports optically coupled to respective photodiodes. Given only as an example, three output ports of circulator 36 are associated with respective optical filters, which are not shown but well known to a POSITA, which in turn are optically connected to respective photodiodes 32, 34 and 38.

One of the photodiodes, for example 32, is operative to detect the process emission in the wavelength range between about 400 nm and about 1000 nm (in the following Visible signal). This photodiodes ensure the evaluation of the process emission related to both continuous thermal emission and backreflected radiations. Visible domain can be divided into two main ranges, (400 nm- 550 nm) and (550nm - 800nm), to better represent continuous emission shifts. Thus, in this configuration very low levels of incoming light can be catch by each of the photodiode in the visible range, requiring complex solutions for signal conditioning.

The other two photodiodes are used to collect NIR radiation. The first one 34 is filtered with a laser line filter and is operative to evaluate backreflected or backscattering signal light. This photodiode is aimed at monitoring completely penetrated welds, where the aperture of the key hole on the root side of the welds shows a high attenuation of the laser beam backscattering.

The other photodiode 38 collects emission between 1150 nm and 1800 nm passed through a respective filter. The acquired signal is related to the near infra-red thermal emission of the process. Generally the time behavior of this photodiode is comparable to the one of the visible signals and their comparison can also warrant control of focus position by chromatic aberration analysis.

The signals from the photodiodes are acquired, conditioned and sampled by CPU 26. If the obtained spectrum in any of the detected ranges does not substantially match the stored reference values, a control signal Ic is output to the laser modules 12 whose parameters, such as output power, are continuously adjusted to obtain the desired spectra of the backreflected radiation.

Referring to FIGS. 1 and 3A-3B, one of many salient features of the disclosed material processing system includes a high quality beam incident on the surface of workpiece 20. The beam quality may be characterized by an $M^2$ factor, as well known to a person of ordinary skills in the art (POSITA). The lower the $M^2$ factor, the higher the beam quality. In some applications, the beam quality factor is not critical, in others, as rather typical a case, it is.

In case of the high beam quality beam parameter, combiner 14 should output an optimally small far-field divergence signal light 30 characterized by the smallest possible $M^2$ factor. In other words, any further reduction of this factor would be associated with deteriorating beam quality. The $M^2$ factor of the combiner's output is determined in as

$$M^2 = \frac{NAmeasured}{NAideal} \qquad \text{where NA is a numerical aperture of the combiner}$$

The feeding single mode fibers 23 are initially arranged in accordance with FIG. 3A and then are heated and stretched. During the stretching, the claddings of respective fibers 23 gradually merge with one another to eventually define the outer boundary of the combiner's output, i.e., multimode delivering fiber 25 of FIG. 3B. Preferably, outputs of respective fiber laser modules supported by respective feeding fibers 23 each are substantially in a fundamental mode. While the numerical aperture and diameter of each fiber 23 reduce, its mode, which has substantially a Gaussian profile ($M^2$ is about 1) enlarges. If the attenuation of each feeding fiber 23 is not controlled, than the modes may reach the fiber cladding. This, in turn, leads to deterioration of combiner's output. Accordingly, the output of disclosed combiner 14 owns its high quality to the preservation of substantially Gaussian shape supported by each individual SM fiber 23. The latter, in turn, has a controlled minimal possible numerical aperture (NA) below which the single mode in this fiber touches the cladding.

In order to avoid the coupling of any single mode into the cladding of combiner 14 shown in dash lines in FIG. 3B, the numerical apertures (NA) of each feeding fiber 23 and combiner 14 are continuously measured and compared to the stored reference value. Once the ratio between the measured NA of combiner 14 (as a function of the effective area, i.e., area limited by a circumference around tops of respective modes), is determined and compared to a stored reference value in CPU 26. Accordingly, multimode delivering fiber 25 controllably supports a high quality signal light 30.

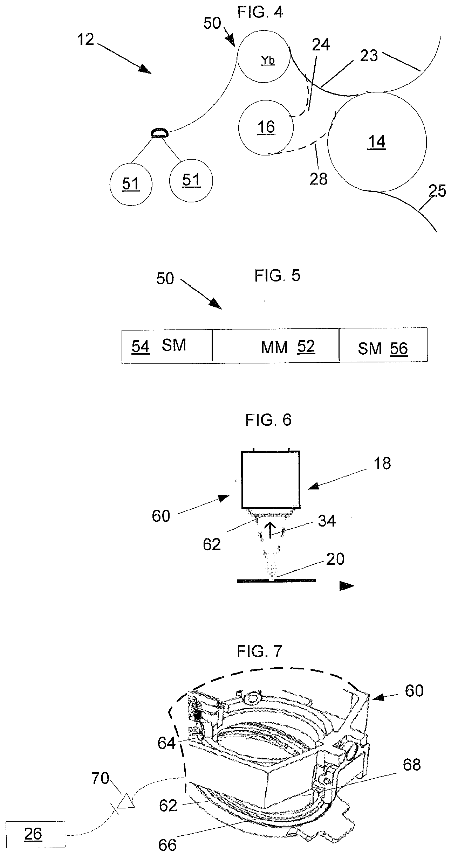

FIG. 4 illustrates laser module 12. In accordance with a further salient feature of the disclosure, the module has a housing enclosing one or more gain blocks 50. For example, block 50 may be configured with a single-stage laser or oscillator generating a 500 or more watt output. In a further modification, each module 12 may be configured with multiple fiber gain blocks 50 including serially coupled oscillators and fiber amplifiers. The fiber block receives pump light generated by a pump assembly which may be configured with another single mode fiber laser or lasers 51 which in turn are pumped by multiple broad-area laser diodes (not shown). The pumping arrangement may be configured as a side- or end-pumping arrangement.

FIG. 5 illustrates the configuration of fiber gain block 50 which preferably generates radiation in a substantially single fundamental mode which, as known to a POSITA, contains maximum light power. The gain block 50 includes an active fiber 52 having a multimode (MM) core which is doped with ions of rare-earth elements. The MM core is configured to support substantially a fundamental mode at the desired wavelength. The opposite ends of active fiber 52 are butt-spliced to respective ends of SM passive input and output fibers 54, 56. To prevent the excitation of higher modes and therefore loss of light at splice regions, the active and passive fibers are configured with substantially identical mode field diameters. The output passive fibers 54 are fused to respective feeding fibers 23, which, in turn, are coupled together to define fiber combiner 14.

Referring to FIGS. 1, 6 and 7, the backreflected radiation 34 also creates unfavorable conditions for focusing optics 58 of laser head 18. In particular, the thermal diffusion is accompanied by material particles leaving the surface of workpiece 20 and impinging upon the opposing component of optics, such as a protective transparent shield 68. The damage to shield 68 inflicted by impinging particles causes the loss of light propagating through protective glass, inferior material processing results and damage to focusing optics 58 of head 18.

When shield 68 is not compromised, there is practically no light scattered through the shield. However, if shield 68 is damaged, scattering light may be detected and evaluated in CPU 26 (FIG. 1). If the power threshold for the scattered light exceeds the empirically selected threshold, fiber laser system 10 should be shut down.

In accordance with a further aspect of the disclosure, the scattering light is detected by a fiber 66 removably around the perimeter of a shield holder 62. If the shield 68 is damaged, scattering light tends to propagate in all directions. Necessarily propagating through fiber 66, the scattering light is further guided by this fiber to an optoelectronic component 70 which is operatively connected to CPU 26 or any other controller. If shield 68 is determined to be unacceptable for further use, holder 62, which is pivotally mounted to the housing of laser head 18, can be easily opened to grant access to the shield.

Although there has been illustrated and described in specific detail and structure of operations, it is understood that the same were for purposes of illustration and that changes and modifications may be made readily therein by those skilled in the art without departing of the scope of the claims.

**Claims**

1. A high power fiber laser system (10) for processing a workpiece (20), comprising:

   - a plurality of laser modules (12) each having an output feeding single mode fiber (23) which supports and guides laser radiation towards the workpiece (20) ,
   - a fiber combiner (14) having the output feeding single mode fibers (23) of the respective modules (12) coupled together into a multimode delivery fiber (25) which guides combined laser radiation from the laser modules (12) along a light path, each feeding single mode fiber (23) has a reduced diameter in said fiber combiner (14) obtained by heating and stretching the individual single mode fibers (23), wherein each single mode fiber (23) has a minimum numerical aperture (NA) below which the single mode touches the cladding, so that the combined laser radiation of the optical combiner (14) has a minimally possible beam quality factor ($M^2$); and

   **characterized by**:

- a laser head (58) receiving the combined laser radiation and operative to direct the combined laser radiation towards a surface of the workpiece (20) so as cause a backreflected radiation (34) to propagate backwards along the light path through the laser head (58), delivery fiber (25) and combiner (14) towards the laser modules (12); and

- a monitoring assembly (16) receiving the backreflected radiation (34) and operative to detect a spectrum of the backreflected radiation (34),

- a controller (26) receiving the detected spectrum from the monitoring assembly (16) and operative to match the detected spectrum to a reference value, the backreflected radiation including thermal emission and backreflected laser signals in UV, NIR and visible ranges from about 400 nm to about 2000 nm,

- wherein a control signal (Ic) is output to the laser modules (12) whose parametes are continuously adjusted to obtain the desired spectra of the backreflected radiation.

2. The high power fiber laser system of claim 1 further comprising a control signal fiber receiving the backreflected radiation from one or more of the feeding fibers and delivering the backreflected radiation to the monitoring assembly.

3. The high power fiber laser system of claim 1, wherein the fiber combiner is configured with an additional control signal fiber delivering the backreflected radiation to the monitoring assembly.

4. The high power fiber laser system of claim 1 , wherein the feeding fibers are configured as respective single mode fibers each with a minimally possible small numerical aperture (NA) which, upon coupling the feeding fibers together, provide for the minimally possible beam quality factor ($M^2$) of the combined laser radiation.

5. The high power fiber laser system of claim 1, wherein the monitoring assembly is configured with an optical guide component selected from the group consisting of beam splitters, isolators and circulators which are operative to route the backreflected along multiple light paths within the monitoring assembly, and sensors selected from the group consisting of spectroscopes, interferometers and photodiodes optically coupled to the respective optical guide components.

6. The high power fiber laser system of claim 1, wherein the laser modules each are configured with an active fiber and input and output passive fibers butt-spliced to respective opposite ends of the active fiber, the active fiber having a multimode core doped with a gain medium and configured to support propagation of a single mode at a desired wavelength, the passive fibers each being single mode fibers and having a mode field diameter (MFD) substantially equal to an MFD of the active fiber.

7. The high power fiber laser system of claim 6, wherein the laser modules each further have a pumping unit provided with one or multiple single mode fiber lasers.

8. The high power fiber laser system of claim 1, wherein the laser head has a protective shield opposing the workpiece, and a sensing fiber surrounding the protective shield and operative to detect scattering light indicative of a damage of the protective shield.

9. A method of operating the high power fiber laser system (10) of claim 7, wherein the laser modules (12) each are configured with an active fiber (52) and input and output passive fibers (56, 54) butt-spliced to respective opposite ends of the active fiber (52), the active fiber (52) having a multimode core doped with a gain medium and configured to support propagation of a single mode at a desired wavelength, the passive fibers (56, 54) each being single mode fibers and having a mode field diameter (MFD) substantially equal to an MFD of the active fiber (52); comprising:

- coupling a plurality of single mode output laser beams into respective output feeding single mode fibers (23);
- stretching the output feeding single mode fibers (23) while monitoring numerical apertures (NAs) of each individual output feeding single mode fiber (23) so as to prevent coupling of a Gaussian-profile mode into a cladding of the output feeding single mode fiber (23);
- simultaneously with stretching coupling the output feeding single mode fibers (23) together so as to provide for a fiber combiner (14) with an output multimode delivery (25) fiber which guides a combined multimode output laser radiation towards a workpiece (20) to be laser treated, the laser radiation having a lowest possible beam quality factor ($M^2$) due to the preservation of the Gaussian-profile mode with a beam quality factor ($M^2$) about 1 supported by each individual output feeding single mode fiber (23),;
- coupling backreflected radiation (34) generated in response to the combined laser radiation incident on a surface of the workpiece (20) into the delivery fiber (25), which guides the coupled backreflected radiation (34) to the combiner (14); and

- monitoring the backreflected radiation (34) received from the combiner (14) so as to detect a spectrum of the backreflected radiation.

10. The method of claim 9, wherein the combinerhas an additional control signal fiber launching the backreflected radiation onto the monitoring assembly.

11. The method of claim 9 further comprising monitoring scattered light indicative of a damaged protective shield which is configured to prevent penetrations of particles of the workpiece accompanying the backreflected radiation into a laser head located between the delivery fiber and the workpiece.

12. The method of claim 11 further comprising providing a fiber around the shield so as to receive the scattered light, and matching the received scattered with a reference value.

**Patentansprüche**

1. Hochleistungs-Faserlasersystem (10) zur Bearbeitung eines Werkstücks (20), das Folgendes umfasst:

   - eine Vielzahl von Lasermodulen (12), die jeweils eine ausgangsseitige Monomode-Zuführungsfaser (23) aufweisen, die die Laserstrahlung trägt und zum Werkstück (20) leitet,
   - einen Faserkombinierer (14), bei dem die ausgangsseitigen Monomode-Zuführungsfasern (23) der jeweiligen Module (12) zu einer Multimode-Lieferfaser (25) zusammengekoppelt sind, die kombinierte Laserstrahlung von den Lasermodulen (12) entlang eines Strahlengangs führt; wobei jede Monomode-Zuführungsfaser (23) in dem Faserkombinierer (14) einen reduzierten Durchmesser aufweist, der durch Erwärmen und Strecken der einzelnen Monomode-Fasern (23) erreicht wird, wobei jede Monomode-Faser (23) eine minimale numerische Apertur (NA) aufweist, unterhalb derer die Monomode den Mantel berührt, sodass die gesamte Laserstrahlung des optischen Kombinierers (14) einen minimal möglichen Strahlqualitätsfaktor ($M^2$) aufweist,

   der sich durch

   - einen Laserkopf (58) auszeichnet, der die gesamte Laserstrahlung aufnimmt und diese auf eine Oberfläche des Werkstücks (20) richtet, sodass sich eine rückreflektierte Strahlung (34) rückwärts entlang des Strahlengangs durch den Laserkopf (58), die Lieferfaser (25) und den Kombinierer (14) zu den Lasermodulen (12) ausbreitet, und
   - eine Überwachungseinheit (16), die die rückreflektierte Strahlung (34) empfängt und in der Lage ist, ein Spektrum von der rückreflektierten Strahlung (34) zu erfassen,
   - eine Steuereinheit (26), die das erfasste Spektrum von der Überwachungseinheit (16) empfängt und das erfasste Spektrum mit einem Referenzwert abgleicht, wobei die rückreflektierte Strahlung thermische Emission und rückreflektierte Lasersignale im UV-, NIR- und sichtbaren Bereich von etwa 400 nm bis etwa 2000 nm umfasst,
   - wobei ein Steuersignal (Ic) an die Lasermodule (12) ausgegeben wird, deren Parameter kontinuierlich eingestellt werden, um die gewünschten Spektren der rückreflektierten Strahlung zu erhalten.

2. Hochleistungs-Faserlasersystem nach Anspruch 1, das ferner eine Steuersignalfaser umfasst, die die rückreflektierte Strahlung von einer oder mehreren der Zuführungsfasern empfängt und die rückreflektierte Strahlung der Überwachungseinheit liefert.

3. Hochleistungs-Faserlasersystem nach Anspruch 1, wobei der Faserkombinierer mit einer zusätzlichen Steuersignalfaser konfiguriert ist, die die rückreflektierte Strahlung zu der Überwachungseinheit liefert.

4. Hochleistungs-Faserlasersystem nach Anspruch 1, wobei die Zuführungsfasern als jeweilige Monomode-Fasern mit einer minimal möglichen kleinen numerischen Apertur (NA) konfiguriert sind, die beim Zusammenkoppeln der Zuführungsfasern für den minimal möglichen Strahlqualitätsfaktor ($M^2$) der gesamten Laserstrahlung sorgen.

5. Hochleistungs-Faserlasersystem nach Anspruch 1, wobei die Überwachungseinheit mit einer optischen Führungskomponente konfiguriert ist, die aus der Gruppe ausgewählt ist, die aus Strahlteilern, Isolatoren und Zirkulatoren besteht, die so funktionieren, dass sie das rückreflektierte Licht entlang mehrerer Strahlengänge innerhalb der Überwachungseinheit leiten, sowie mit Sensoren, die aus der Gruppe ausgewählt sind, die aus Spektroskopen, Interferometern und Fotodioden besteht, die optisch mit den jeweiligen optischen Führungskomponenten gekoppelt sind.

6. Hochleistungs-Faserlasersystem nach Anspruch 1, wobei die Lasermodule jeweils mit einer aktiven Faser und passiven Eingangs- und Ausgangsfasern konfiguriert sind, die mit den jeweiligen gegenüberliegenden Enden der aktiven Faser stumpfgespleißt sind, wobei die aktive Faser einen Multimode-*Kern* aufweist, die mit einem Verstärkungsmedium dotiert und so konfiguriert ist, dass sie die Ausbreitung einer einzelnen Mode bei einer gewünschten Wellenlänge unterstützt, wobei die passiven Fasern jeweils Monomode-Fasern sind und einen Modenfelddurchmesser (MFD) aufweisen, der im Wesentlichen gleich einem MFD der aktiven Faser ist.

7. Hochleistungs-Faserlasersystem nach Anspruch 6, wobei die Lasermodule jeweils eine Pumpeinheit mit einem oder mehreren Monomode-Faserlasern aufweisen.

8. Hochleistungs-Faserlasersystem nach Anspruch 1, wobei der Laserkopf eine dem Werkstück gegenüberliegende Schutzabschirmung und eine Sensorfaser aufweist, die die Schutzabschirmung umgibt und dazu dient, Streulicht zu erfassen, das eine Beschädigung der Schutzabschirmung anzeigt.

9. Verfahren zum Betrieb des Hochleistungs-Faserlasersystems (10) nach Anspruch 7,
wobei die Lasermodule (12) jeweils mit einer aktiven Faser (52) und passiven Eingangs- und Ausgangsfasern (56, 54) konfiguriert sind, die mit den jeweiligen gegenüberliegenden Enden der aktiven Faser (52) stumpfgespleißt sind, wobei die aktive Faser (52) einen Multimode-Kern aufweist, die mit einem Verstärkungsmedium dotiert und so konfiguriert ist, dass sie die Ausbreitung einer einzelnen Mode bei einer gewünschten Wellenlänge unterstützt, wobei die passiven Fasern (56, 54) jeweils Monomode-Fasern sind und einen Modenfelddurchmesser (MFD) aufweisen, der im Wesentlichen gleich einem MFD der aktiven Faser (52) ist, und Folgendes umfasst:

- Koppeln einer Vielzahl von Monomode-Ausgangslaserstrahlen in entsprechende ausgangsseitige Monomode-Zuführungsfasern (23) ,
- Strecken der ausgangsseitigen Monomode-Zuführungsfasern (23) bei gleichzeitiger Überwachung der numerischen Aperturen (NA) jeder einzelnen ausgangsseitigen Monomode-Zuführungsfaser (23), um die Einkopplung einer Mode mit Gauß-Profil in einen Mantel der ausgangsseitigen Monomode-Zuführungsfaser (23) zu verhindern,
- gleichzeitig mit dem Strecken, Koppeln der ausgangsseitigen Monomode-Zuführungsfasern (23) miteinander, um einen Faserkombinierer (14) mit einer ausgangsseitigen Multimode-Lieferfaser (25) bereitzustellen, die eine kombinierte Multimode-Ausgangslaserstrahlung zu einem zu laserbehandelnden Werkstück (20) leitet, wobei die Laserstrahlung einen möglichst niedrigen Strahlqualitätsfaktor ($M^2$) aufgrund der Erhaltung der Gauß-Profil-Mode mit einem Strahlqualitätsfaktor ($M^2$) von etwa 1 aufweist, der von jeder einzelnen ausgangsseitigen Monomode-Zuführungsfaser (23) unterstützt wird,
- Koppeln von rückreflektierter Strahlung (34), die als Reaktion auf die auf eine Oberfläche des Werkstücks (20) auftreffende kombinierte Laserstrahlung erzeugt wird, an die Lieferfaser (25), die die eingekoppelte rückreflektierte Strahlung (34) zu dem Kombinierer (14) leitet, und
- Überwachen der rückreflektierten Strahlung (34) die vom Kombinierer (14) empfangen wird, um ein Spektrum der rückreflektierten Strahlung zu erfassen.

10. Verfahren nach Anspruch 9, wobei der Kombinierer eine zusätzliche Steuersignalfaser hat, die die rückreflektierte Strahlung an die Überwachungseinheit leitet.

11. Verfahren nach Anspruch 9, das ferner die Überwachung von Streulicht umfasst, das auf eine beschädigte Schutzabschirmung hinweist, die so konfiguriert ist, dass sie das Eindringen von Partikeln des Werkstücks, die die rückreflektierte Strahlung begleiten, in einen Laserkopf verhindert, der sich zwischen der Lieferfaser und dem Werkstück befindet.

12. Verfahren nach Anspruch 11, das ferner die Bereitstellung einer Faser um die Abschirmung herum umfasst, um das Streulicht zu empfangen, und das empfangene Streulicht mit einem Referenzwert abzugleichen.

**Revendications**

1. Système laser à fibre de haute puissance (10) pour le traitement d'une pièce à usiner (20), comprenant :

   - une pluralité de modules laser (12) ayant chacun une fibre monomode d'alimentation de sortie (23) qui supporte et guide le rayonnement laser vers la pièce à usiner (20),
   - un combineur de fibres (14) dont les fibres monomodes d'alimentation de sortie (23) des modules (12) respectifs sont couplées ensemble en une fibre d'irradiation multimode (25) qui guide le rayonnement laser combiné des modules laser (12) le long d'un trajet lumineux, dans lequel chaque fibre monomode d'alimentation (23) ayant un diamètre réduit dans ledit combineur de fibres (14) obtenu en chauffant et en étirant les fibres monomodes individuelles (23), dans lequel chaque fibre monomode (23) a une ouverture numérique minimale (NA) en dessous de laquelle le monomode touche la gaine, de sorte que le rayonnement laser combiné du combineur optique (14) présente un facteur de qualité de faisceau ($M^2$) minimal possible,

   et **caractérisé par**

   - une tête laser (58) recevant le rayonnement laser combiné et fonctionnant pour diriger le rayonnement laser combiné vers une surface de la pièce à usiner (20) de manière à provoquer un rayonnement rétro-réfléchi (34) se propageant vers l'arrière le long du trajet lumineux à travers la tête laser (58), la fibre d'irradiation (25) et le combineur (14) vers les modules laser (12) ; et
   - un ensemble de surveillance (16) recevant le rayonnement rétro-réfléchi (34) et permettant de détecter un spectre du rayonnement rétro-réfléchi (34),
   - un contrôleur (26) recevant le spectre détecté de l'ensemble de contrôle (16) et permettant de faire correspondre le spectre détecté à une valeur de référence, le rayonnement rétro-réfléchi, y compris l'émission thermique et les signaux laser rétro-réfléchis dans les gammes UV, NIR et visibles allant d'environ 400 nm à environ 2000 nm,
   - dans lequel un signal de commande (Ic) est émis vers les modules laser (12) dont les paramètres sont continuellement ajustés pour obtenir les spectres souhaités du rayonnement rétro-réfléchi.

2. Système laser à fibre de haute puissance selon la revendication 1, comprenant en outre une fibre de signal de commande recevant le rayonnement rétro-réfléchi d'au moins l'une des fibres d'alimentation et délivrant le rayonnement rétro-réfléchi à l'ensemble de contrôle.

3. Système laser à fibre de haute puissance selon la revendication 1, dans lequel le combineur de fibres est configuré avec une fibre de commande de contrôle supplémentaire délivrant le rayonnement rétro-réfléchi à l'ensemble de contrôle.

4. Système laser à fibre de haute puissance selon la revendication 1, dans lequel les fibres d'alimentation sont configurées comme des fibres monomodes respectives, chacune avec l'ouverture numérique (NA) la plus petite possible, qui permettent d'obtenir, lors du couplage les fibres d'alimentation, le facteur de qualité du faisceau ($M^2$) le plus petit possible du rayonnement laser combiné.

5. Système laser à fibre de haute puissance selon la revendication 1, dans lequel l'ensemble de contrôle est configuré avec un composant de guidage optique choisi dans le groupe constitué par des séparateurs de faisceau, des isolateurs et des circulateurs qui fonctionnent pour acheminer la rétro-réflexion le long de multiples chemins lumineux dans l'ensemble de contrôle, et des capteurs choisis dans le groupe constitué par des spectroscopes, des interféromètres et des photodiodes couplés optiquement à l'ensemble de contrôle, et des capteurs choisis dans le groupe constitué par des spectroscopes, des interféromètres et des photodiodes couplés optiquement aux composants de guidage optique respectifs.

6. Système laser à fibre de haute puissance selon la revendication 1, dans lequel les modules laser sont chacun configurés avec une fibre active et des fibres passives d'entrée et de sortie aboutées aux extrémités opposées respectives de la fibre active, la fibre active ayant un *côté* multimode dopé avec un milieu amplificateur et configuré pour supporter la propagation d'un mode unique à une longueur d'onde désirée, les fibres passives étant chacune des fibres monomodes et ayant un diamètre de champ de mode (MFD) sensiblement égal à un MFD de la fibre active.

7. Système laser à fibre de haute puissance selon la revendication 6, dans lequel les modules laser comportent chacun une unité de pompage dotée d'un ou de plusieurs lasers à fibre monomodes.

8. Système laser à fibre de haute puissance selon la revendication 1, dans lequel la tête laser a un écran de protection opposé à la pièce, et une fibre de détection entourant l'écran de protection et fonctionnant pour détecter la lumière diffusée indiquant un endommagement de l'écran de protection.

9. Méthode de fonctionnement du système laser à fibre de haute puissance (10) de la revendication 7, dans lequel les modules laser (12) sont chacun configurés avec une fibre active (52) et des fibres passives d'entrée et de sortie (56, 54) aboutées aux extrémités opposées respectives de la fibre active (52), la fibre active (52) ayant un noyau multimode dopé avec un milieu amplificateur et configuré pour supporter la propagation d'un mode unique à une longueur d'onde souhaitée, les fibres passives (56, 54) étant chacune des fibres monomodes et ayant un diamètre de champ de mode (MFD) substantiellement égal à un MFD de la fibre active (52) comprenant de :

- coupler une pluralité de faisceaux laser monomodes de sortie dans des fibres monomodes d'alimentation de sortie respectives (23) ;
- étirer la sortie alimentant les fibres monomodes (23) tout en contrôlant les ouvertures numériques (NA) de chaque fibre monomode d'alimentation de sortie (23) de manière à empêcher le couplage d'un mode à profil gaussien dans une gaine de la fibre monomode d'alimentation de sortie (23) ;
- simultanément à l'étirement, coupler les fibres monomodes d'alimentation de sortie (23) de manière à obtenir un combineur de fibres (14) avec une fibre d'irradiation multimode (25) qui guide un rayonnement laser de sortie multimode combiné vers une pièce (20) à usiner au laser, le rayonnement laser ayant un facteur de qualité de faisceau le plus faible possible ($M^2$)en raison de la préservation du mode à profil gaussien avec un facteur de qualité de faisceau ($M^2$) d'environ 1 supporté par chaque fibre individuelle monomode d'alimentation en sortie (23) ;
- coupler le rayonnement rétro-réfléchi (34) généré en réponse au rayonnement laser combiné incident sur une surface de la pièce (20) dans la fibre d'irradiation (25) qui guide le rayonnement rétro-réfléchi (34) couplé vers le combineur (14) ; et
- contrôler le rayonnement rétro-réfléchi (34) reçu du combineur (14) afin de détecter un spectre du rayonnement rétro-réfléchi.

10. Méthode selon la revendication 9, dans laquelle le combineur est doté d'une fibre de signal de commande supplémentaire qui envoie le rayonnement rétro-réfléchi sur l'ensemble de contrôle.

11. Méthode selon la revendication 9 comprenant en outre le contrôle de la lumière diffusée indiquant un écran de protection endommagé, configuré pour empêcher la pénétration de particules de la pièce accompagnant le rayonnement rétro-réfléchi dans une tête laser située entre la fibre d'irradiation et la pièce.

12. Méthode selon la revendication 11 comprenant en outre la mise en place d'une fibre autour du bouclier de manière à recevoir la lumière diffusée, et à faire correspondre la lumière diffusée reçue à une valeur de référence.

FIG. 1

FIG. 3A

Fig. 2

FIG. 3B

FIG. 4

FIG. 5

| 54 SM | MM 52 | SM 56 |

FIG. 6

FIG. 7

**EP 3 689 530 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010189138 A1
- KR 20090112282 A